# EUROPÄISCHE PATENTSCHRIFT

(11) **EP 1 131 195 B1**
(45) Veröffentlichungstag und Bekanntmachung des Hinweises auf die Patenterteilung: **10.12.2003**
(21) Anmeldenummer: 99963311.8
(22) Anmeldetag: 19.11.1999
(51) Int. Cl.: B29C 31/00

(54) **VORRICHTUNG UND VERFAHREN ZUR HERSTELLUNG VON FASERVERSTÄRKTEN KUNSTSTOFFEN BZW. KUNSTSTOFFBAUTEILEN NACH EINEM MODIFIZIERTEN RTM-VERFAHREN**
DEVICE AND METHOD FOR PRODUCING FIBRE-REINFORCED PLASTIC MATERIALS OR PLASTIC COMPONENTS USING A MODIFIED RTM PROCESS
DISPOSITIF ET PROCEDE POUR LA PRODUCTION DE MATIERE PLASTIQUE RENFORCEE PAR DES FIBRES OU D'ELEMENTS DE CONSTRUCTION CONSTITUES D'UNE TELLE MATIERE PLASTIQUE SELON UN PROCEDE MODIFIE DE MOULAGE PAR TRANSFERT DE RESINE

(30) Priorität: 20.11.1998 DE 19853709
(43) Veröffentlichungstag der Anmeldung: 12.09.2001
(73) Patentinhaber: Deutsches Zentrum für Luft- und Raumfahrt e.V., 53175 Bonn (DE); Invent GmbH, 38100 Braunschweig (DE)
(72) Erfinder: KLEINEBERG, Markus, D-30966 Hemmingen (DE); NICKEL, Jörg, D-38104 Braunschweig (DE); PABSCH, Arno, D-38110 Braunschweig (DE); SIGLE, Christof, D-38104 Braunschweig (DE); SCHÖPPINGER, Carsten, D-38259 Salzgitter (DE)
(74) Vertreter: Einsel, Martin
(86) Internationale Anmeldenummer: EP9908883
(87) Internationale Veröffentlichungsnummer: WO00030823

(56) Entgegenhaltungen:
- DE-C- 19 536 675
- GB-A- 2 316 036
- US-A- 3 975 479
- US-A- 4 902 215
- US-A- 4 942 013
- US-A- 4 997 606
- US-A- 5 248 467

## Beschreibung

Die vorliegende Erfindung betrifft eine Vorrichtung und ein Verfahren zur Herstellung von Bauelementen aus Faserverbundwerkstoffen, wobei ein vorgeformtes trockenes Fasermaterial in eine Form eingebracht und in der Form mit einem reaktiven Harz bzw. Harzgemisch imprägniert wird.

Weiter betrifft die Erfindung ein Verfahren mit dem Gaseinschlüsse in dem Fasermaterial vermieden werden können.

Die Herstellung leistungsfähiger Faserverbundwerkstoffe durch Imprägnierung eines trockenen Fasermaterials mit einem Harz und Aushärten des Harzes in einer Form, wobei die Form zur Verbesserung der Laminatqualität vor der Harzinjektion evakuiert werden kann, ist an sich bekannt.

Derartige Faserverbundwerkstoffe, wie sie zum Beispiel für die Luftfahrt und den Kfz-Bau eingesetzt werden, werden zur Zeit vorwiegend über zwei Verfahren, der sogenannten Prepreg-Technik oder diverser RTM(Resin Transfer Moulding)-Verfahren, hergestellt.

Bei der Prepreg-Technik erfolgt die Bauteilherstellung mit Hilfe von vorgefertigten, bereits mit Harz durchtränkten Faserhalbzeugen, sogenannten Prepregs. Die dabei verwendeten Faserhalbzeuge werden mit Harz getränkt und bis zur endgültigen Verwendung gekühlt gelagert.

Zur Herstellung einer Verbundstruktur nach diesem Verfahren werden die einzeinen Prepregs, aus denen der Verbund aufgebaut wird, in einem Formwerkzeug abgelegt und anschließend mit einer perforierten Trennfolie abgedeckt. Darüber werden sogenannte Auffang- bzw. Absauggewebelagen aufgebracht, die zum einen den bei der Verpressung des Prepreg-Stapels austretenden Harzüberschuß aufnehmen und zum anderen die gleichmäßige Verteilung des Vakuums und das Absaugen von Lufteinschlüssen und anderer Stoffe ermöglichen. Dieser ganze Stapel wird schließlich mit einer Folie luftdicht verschlossen und in einem Autoklaven unter Druck und Temperatur fertig ausgehärtet.

Vorteilhaft ist hier, daß die Faserausrichtung der Prepregs, aus denen der Verbund aufgebaut wird, exakt ausgerichtet werden kann, und sich die Fasereigenschaften dadurch optimal ausnutzen lassen, so daß Verbundwerkstoffe mit gleichmäßig guter Qualität hergestellt werden können. Jedoch erfordert die exakte Ausrichtung der Prepregs einen hohen manuellen Aufwand. Von Nachteil ist weiter, daß die bereits mit Harz getränkten Prepregs bei tiefen Temperaturen gelagert werden müssen, um so die kontinuierlich fortschreitende Aushärtung des Harzes bzw. Alterung zu verlangsamen, wobei die Lagerhaltung an sich und insbesondere gekühlte Lagerhaltung die Fertigungskosten erhöht. Zudem ist die Haltbarkeitsdauer der Prepregs aufgrund der durch die Kühlung lediglich verlangsamten Aushärtung in den meisten Fällen auf einen Zeitraum von weniger als einem Jahr begrenzt.

Für die Fertigung nach dem RTM-Verfahren wird in einem ersten Schritt ein der Kontur des gewünschten Bauteils entsprechender Vorformling aus trockenem Fasermaterial hergestellt und in eine steife RTM-Form eingebracht. Nach dem Einlegen des Vorformlings wird die Form geschlossen und das vorbereitete Harz mit Überdruck in die Form injiziert. Zur Vermeidung von Lufteinschlüssen und zur Gewährleistung einer verbesserten Verteilung des Harzes kann die Form vor der Injektion evakuiert werden (vacuum assisted resin injection-Verfahren).

Verglichen mit der Prepreg-Technologie zeichnet sich das RTM-Verfahren durch die Verwendung von kostengünstigen Faser- und Harzmaterialien sowie durch die freie Kombinierbarkeit der Komponenten aus. Dadurch kann mit dem Verfahren eine sehr große Flexibilität erzielt werden. So können hochreaktive Harzgemische eingesetzt werden, die die Taktzeiten für den Injektionsvorgang auf wenige Minuten verkürzen, oder es können für temperaturkritische Anwendungen besonders temperaturbeständige Matrix-Systeme eingesetzt werden.

Jedoch ist der apparative Aufwand relativ hoch, da für die Erzeugung des Vakuums und die injektion des Harzes jeweils separate Leitungen erforderlich sind, die in Abständen ausgetauscht werden müssen, da sich ausgehärtetes Harz darin.absetzt. Zudem kann es an Stellen, an denen Harzfließfronten im Fasermaterial zusammentreffen, zu Gaseinschlüssen kommen.

In dem US-Patent 4,902,215 ist eine vakuumunterstützte Vorrichtung zur Herstellung von faserverstärkten Kunststoffen beschrieben, wobei in ein unteres formgebendes Werkzeug das vorgefertigte Fasermaterial eingelegt wird, und darauf eine flexible Abdeckung zum vakuumdichten Verschließen der Form aufgebracht wird. In Betrieb wird durch die flexible Abdeckung Harz in das Innere der Form eingeleitet und das darin befindliche Fasermaterial mit Harz getränkt.
Zur Unterstützung des Harzflusses wird vorgeschlagen, zwischen der Oberfläche des Fasermaterials und der Abdeckung ein Harzverteilungsmedium als Abstandhalter aufzubringen, wobei das Medium gitterförmig ausgebildet ist und durch die Gitterstruktur vertikale und laterale Kanäle gebildet werden, über die sich das flüssige Harzmaterial über die gesamte Oberfläche des Fasermaterials verteilen kann.
Optional kann zwischen der Oberfläche des Fasermaterials und dem Harzverteilungsmedium eine weitere Schicht vorgesehen werden, die zur Strukturierung der Oberfläche des Fasermaterials dient und die für das flüssige Kunststoffharz durchlässig ist.

Der Erfindung liegt daher die Aufgabe zugrunde, ein neues kostengünstiges und weitgehend automatisierbares Fertigungsverfahren für Hochleistungsverbundwerkstoffe, das auch für die Herstellung von großflächigen Bauteilen geeignet ist, zur Verfügung zu stellen, welches insbesondere in Kombination mit ungetränkten Fasermaterialien verbesserte Möglichkeiten hinsichtlich Herstellung, Konstruktion und Gestaltung neuartiger Konzepte aus faserverstärkten Verbundstoffen unter besonderer Berücksichtigung einer einfachen Handhabung und besonderen Eignung für eine Serienfertigung bietet, sowie eine Vorrichtung zur Durchführung dieses Verfahrens.

Es ist eine zweite Aufgabe der vorliegenden Erfindung ein Verfahren und eine Vorrichtung zur Herstellung von faserverstärkten Kunststoffen bzw. -teilen zur Verfügung zu stellen, das mit einem geringen Aufwand an Leitungen und Anschüssen eine sichere Prozessführung mit kontrollierter Harzausbreitung ermöglicht und bei dem darüber hinaus der Anfall von nicht wieder verwendbaren Komponenten wie Leitungen mit ausgehärtem Harz, minimiert und folglich die Wirtschaftlichkeit verbessert werden kann.

Weiter ist es eine Aufgabe der vorliegenden Erfindung, ein Verfahren zur Verfügung zu stellen, mit dem Gaseinschlüsse, insbesondere auch in großflächigen Kunststoffbauteilen, vermieden werden können.

Gelöst wird diese Aufgabe durch die Merkmale der Ansprüche 1 und 10. Bevorzugte Ausführungsformen sind Gegenstand der jeweils davon abhängigen Unteransprüche.

Die Erfindung betrifft ganz allgemein eine Fortentwicklung des bekannten RTM-Verfahrens.

Für das erfindungsgemäße Verfahren wird z. B. wie bei bekannten RTM-Verfahren das zu formende Fasermaterial in eine Form eingebracht und das reaktive Harzgemisch, mit dem das Fasermaterial imprägniert werden soll, in die Form eingeleitet.

Erfindungsgemäß erfolgt die Evakuierung der Form und Injektion des Harzes jedoch über eine einzige Leitung, die wahlweise mit einer Drucksenke, z. B. Vakuumpumpe, oder einem Vorratsbehälter für das Harz verbindbar ist.

Durch die Verwendung einer einzigen Leitung für die Evakuierung und Injektion des Harzes läßt sich der apparative Aufwand sowie der Anfall an mit Harz verstopften Teilen, die entweder gereinigt oder ausgetauscht werden müssen, erheblich verringern.

Gemäß einer besonders bevorzugten Ausführungsform können auf dem Fasermaterial, insbesondere an den Stellen, an den Harzfließfronten zusammentreffen, Mittel (nachfolgend lokale Kavitäten genannt) vorgesehen sein, die Gaseinschlüsse und Verunreinigungen, die sich entlang der Fließfronten angesammelt haben, aus dem Fasermaterial heraus in sich aufnehmen können.

Für das erfindungsgemäße Verfahren und Vorrichtung kann prinzipiell auf an sich bekannte Formen zurückgegriffen werden wie sie für das RTM-Verfahren oder die Prepreg-Technik verwendet werden.

Geeignete Formen umfassen ein vergleichsweise starres formgebendes Werkzeug, auf das das zu formende Fasermaterial abgelegt wird, ein vergleichsweise flexibles Formteil, mit dem die Form vakuumdicht verschlossen werden kann, und Anschlüsse für eine Injektions- und Vakuumleitung.

Eine ausführliche Beschreibung einer gattungsgemäßen Form sowie von geeigneten Verfahrensparametern, insbesondere Druck etc., wie sie prinzipiell auch für die vorliegende Erfindung angewendet werden können, findet sich z. B. in der WO 97/12754 (PCT/EP 96/04213) der selben Anmelderin.

Die Erfindung ist in den Zeichnungen beispielsweise veranschaulicht und im nachstehenden anhand der Zeichnungen beschrieben. Es zeigen:
- **Figur 1**: ein Ausführungsbeispiel der erfindungsgemäßen Vorrichtung während der Injektionsphase;
- **Figur 2**: zeigt einen Ausschnitt der Vorrichtung während der Evakuierungsphase;
- **Figur 3**: in Vergrößerung einen Querschnitt durch eine Stelle der in Figur 1 gezeigten Form mit lokaler Kavität;
- **Figur 4**: eine Spannvorrichtung zum vakuumdichten Verschließen des Vorratsbehälters für das Harz; und
- **Figur 5**: eine weitere Ausführungsform der Spannvorrichtung, wobei die obere Abbildung die Spannvorrichtung während der Evakuierungsphase und die untere Abbildung während der Injektionsphase zeigt.

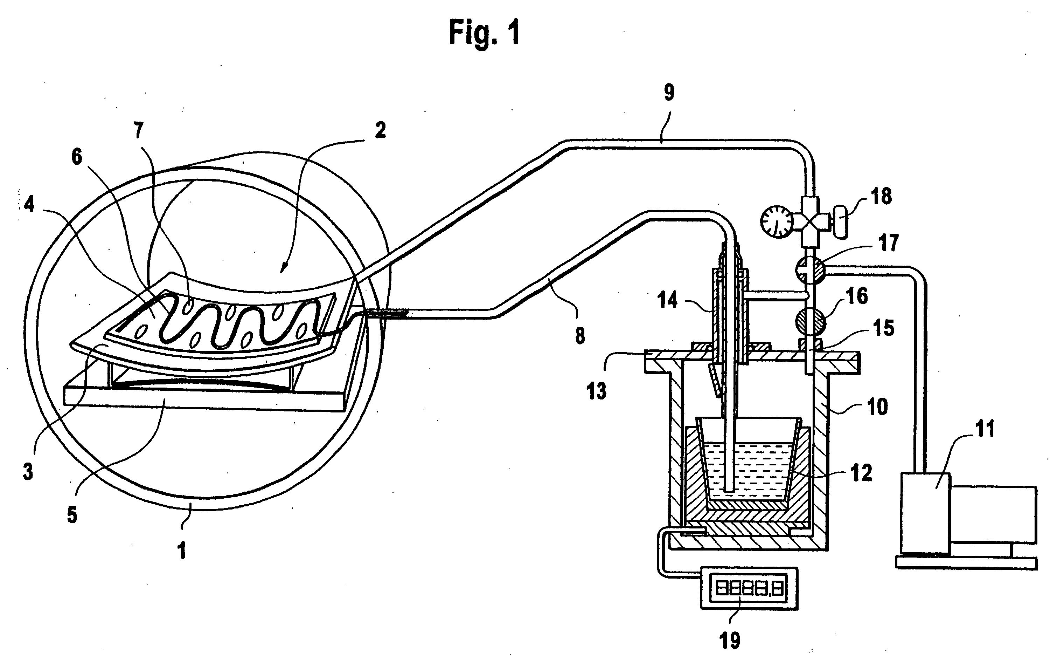

Die in Figur 1 dargestellte bevorzugte Ausführungsform zur Durchführung des erfindungsgemäßen Verfahrens (nachfolgend auch Single-Line-Injektion (SLI)-Verfahren bezeichnet) weist eine Form 2 auf, die in einen Druckbehälter 1 - hier einen Autoklaven - eingebracht ist.

Zur Verdeutlichung des Versuchaufbaus ist in Figur 1 lediglich das formgebende Werkzeug 3 der Form 2 dargestellt und das flexible Formteil mit dem üblicherweise die Form vakuumdicht verschlossen werden kann, ist weggelassen.

Das formgebende Werkzeug 3 ist entsprechend der Kontur der äußeren Oberfläche eines zu fertigenden Bauteils geformt, wobei die Oberflächengüte des Werkzeuges für die Oberflächengüte des Bauteils bestimmend ist. Das Werkzeug sollte aus einem formstabilen Material wie Blech oder auch Kunststoffen bestehen. Für komplexere Strukturen hat sich faserverstärkter Kunststoff bewährt, der beispielsweise auf einem Muster des Bauteils abgeformt werden kann.

Das Werkzeug kann massiv oder als dünnwandige Schale ausgeführt sein, da es im wesentlichen nur durch das Eigengewicht belastet wird.

Die Formstabilität kann zudem durch Stützen oder Auflagen 5, auf denen das formgebende Werkzeug 3 ruht, gewährleistet oder unterstützt werden.

Bei großflächigen Bauteilen, z. B. solchen mit großer Längserstreckung, kann das formgebende Werkzeug 3 auch aus mehreren Einzelelementen zusammengesetzt sein, die nebeneinander auf ein Stützgerüst befestigt sein können.
Da die Verbindungen dabei im wesentlichen nur durch das Gewicht der Form und des Bauteils bzw. des Fasermaterials belastet sind, genügen im allgemeinen einfache Klebverbindungen.

Zur besseren Verteilung des Harzes können auf dem Fasermaterial 4 Leitungselemente 6 mit Öffnungen für den Harzaustritt vorgesehen sein, die nach dem Imprägnieren und Aushärten wieder von dem Fasermaterial 4 entfernt werden.

Über die Lage dieser Leitungselemente 6 auf dem Fasermaterial 4 läßt sich der Verlauf der Fließfronten des Harzes durch das Fasermaterial 4 bestimmen und beeinflussen.

Zum Verschließen der Form 2 wird auf das formgebende Werkzeug 3, nachdem auf diesem das Fasermaterial 4 sowie die Leitungselemente 6 und gegebenenfalls eine oder mehrere lokale Kavitäten 7 zur Aufnahme von Gaseinschlüssen aufgebracht worden sind, ein vergleichsweise flexibles Formteil 130 - in der Figur nicht gezeigt ― aufgelegt, das an den Rändern mit dem formgebenden Werkzeug vakuumdicht verbindbar ist. Beispielsweise kann das flexible Formteil 30 dabei das formgebende Werkzeug 3 über- und untergreifen. Die Dichtung im Randbereich kann durch einen Siegel- oder Klebstreifen erfolgen.
Im einfachsten Fall kann das flexible Formteil (30) eine entsprechend dem äußeren Umfang des Werkzeuges 3 zugeschnittene Folie sein, die auf der Oberfläche des Werkzeuges 3 mit Siegel- oder Klebstreifen abgedichtet sein kann.

Das flexible Formteil (30) ist vorzugsweise elastisch verformbar und kann beispielsweise aus einem elastopolymeren Werkstoff bestehen. Besonders geeignet sind Werkstoffe, die durch das Harz nicht benetzbar sind wie z. B. Silicongummi.

Durch das flexible Formteil (30) können auch komplexe Strukturen wie Vorsprünge, Rippen, Kreuzungspunkte von Vorsprüngen etc. abgebildet werden. Dazu können die Bereiche komplexer Strukturen als gesonderte Formelemente vorgefertigt werden und dann mit ebenen Folien oder ausreichend flexiblen Platten z. B. durch Anvulkanisierung, zu dem fertigen flexiblen Formteil verbunden werden.

Das Fasermaterial 4 kann vor dem Einlegen in die Form 2 konfektioniert und entsprechend den geforderten Festigkeitseigenschaften des gewünschten Bauelements als sogenannte Fasergelegegamitur vorgefertigt werden.
Zur Ausbildung von komplexen Strukturen wie Vorsprüngen können entsprechend geformte Faserstreifen auf das ebene Fasermaterial 4 aufgesetzt und durch Nadeln, Nähen oder dergleichen befestigt werden. Im folgenden wird allgemein der Begriff Fasermaterial verwendet.

Durch Evakuierung oder Teilevakuierung der Form 2 vor dem Einbringen der geschlossenen Form in den Druckbehälter 1 kann die feste und rutschsichere Anlage des Fasermaterials 4 und des flexiblen Formteils an dem formgebenden Werkzeug 3 gesichert werden.

Zur Herstellung des Bauteils wird die wie vorstehend beschrieben vorbereitete Form 2 in den Druckbehälter 1 gebracht. Anschließend wird in der Form 2 das gewünschte Endvakuum hergestellt und in dem Druckraum des Druckbehälters ein geeigneter Druck aufgebaut.

In der erfindungsgemäßen Vorrichtung erfolgt die Evakuierung der Form sowie die Injektion des Harzes über eine einzige Leitung 8 (nachfolgend Injektions- und Evakuierungsleitung bzw. luE-Leitung bezeichnet).

Diese luE-Leitung 8 ist einerseits über einen Anschluß am Druckbehälter 1 mit dem Leitungselement 6 und andererseits wahlweise mit einer Drucksenke 11 z. B. einer Vakuumpumpe, oder einem Vorratsbehälter 10 für das zu injizierende Harz verbunden.

Der Druckbehälter 1 ist über eine Drucktransferleitung 9 mit dem Vorratsbehälter 10 verbindbar.

In der in Figur 1 dargestellten Ausführungsform sind die Drucktransferleitung 9 und die luE-Leitung 8 mit derselben Drucksenke 11 verbindbar. Zur Evakuierung des Forminnenraumes wird die Verbindung der luE-Leitung 8 zum Vorratsbehälter 10 unterbrochen und die Verbindung zur Drucksenke 11 geöffnet.

Die Evakuierung des Forminnenraums erfolgt bis zu einem Unterdruck, der für die Imprägnierung des Fasermaterials mit dem Harzgemisch geeignet ist. Der in der Form 2 hergestellte Unterdruck sollte kleiner als 50 hPa (vorzugsweise zwischen 10 und 1 hPa) sein, was einem technischen Vakuum entspricht.

Im Betrieb wird in den Druckraum des Druckbehälters 1 ein geeigneter Druck aufgebaut, der beispielsweise in der Größenordnung von 0,3 bis 1,0 MPa, und insbesondere bei etwa 0,6 MPa liegen sollte; ein Druck von 0,6 MPa = 6 bar entspricht damit dem zulässigen Innendruck von Großautoklaven, wie sie in der Luftfahrtindustrie eingesetzt werden.

Nach Erreichen der Enddrücke in dem Forminnenraum und in dem Druckbehälter wird die Verbindung der Drucktransferleitung 9 und der IuE-Leitung 8 zur Drucksenke unterbrochen und es erfolgt in einer zweiten Stufe die Injektion des Harzes.

Zur Vorbereitung der Injektion wird zunächst das Harz bzw. Harzgemisch in den Vorratsbehälter 10 eingebracht und der Behälter z. B. mit einem Deckel 13 vakuumdicht verschlossen.

Der Vorratsbehälter 10 wird ebenfalls evakuiert, wobei der Unterdruck im Behälter zur Entgasung des Harzes vor der Injektion genutzt werden kann.

Um die Temperatur des Harzes zu kontrollieren, kann der Behälter oder Topf 12, der das Harz enthält, bzw. der gesamte Vorratsbehälter 10, isoliert und/oder beheizt werden.

Der Deckel 13 verfügt über Anschlüsse 14 und 15 für die luE-Leitung 8 und die Drucktransferleitung 9, über die die Verbindung des Vorratsbehälters 10 mit der Form 2 einerseits und dem Druckbehälter 1 andererseits hergestellt werden kann.

Zur Injektion des Harzes wird die luE-Leitung über den Anschluß 14 in dem Deckel 13 in den Harzbehälter 12 geschoben und der Vorratsbehälter 10 mit Druck beaufschlagt. Zweckmäßigerweise erfolgt die Druckbeaufschlagung des Vorratsbehälter 10 mit dem Druckbehälterdruck. Mit der Druckbeaufschlagung beginnt der Injektionsvorgang.

Der Druck in dem Vorratsbehälter 10 kann über einen Druckminderer 18 in der Drucktransferleitung 9 geregelt werden.

Die Anschlüsse 14 und 15 für die luE-Leitung 8 und die Drucktransferleitung 9 können beliebig ausgestaltet sein, solange der Vorratsbehälter 10 vakuumdicht verschließbar ist.

Wie in Figur 1 gezeigt kann der Anschluß 14 für die luE-Leitung 8 als Schiebehülse mit einer Schwingklappe ausgestaltet sein.

Der Anschluß 15 für die Drucktransferleitung 9 kann eine einfache Öffnung in dem Deckel 13 sein, die die Drucktransferleitung aufnehmen kann. Hierbei kann die Verbindung zwischen Drucktransferleitung und Vorratsbehälter auf einfache Weise durch einen Absperrmechanismus 16, z. B. einen Absperrhahn, unterbrochen werden, wobei der Absperrmechanismus an geeigneter Stelle in der Drucktransferleitung 9 positioniert ist, z. B. wie in Figur 1 gezeigt wenig oberhalb des Deckels 13.

In der in Figur 1 gezeigten bevorzugten Ausführungsform der erfindungsgemäßen Vorrichtung für das erfindungsgemäße SLI-Verfahren ist der Anschluß 14 mit der Drucktransferleitung 9 und über diese mit der Drucksenke 11 verbindbar. Die Verbindung der Drucksenke 11 zum Anschluß 14 oder zum Druckbehälter 1 kann über einen Regelmechanismus 17, zum Beispiel einen Mehrweghahn, geregelt werden.

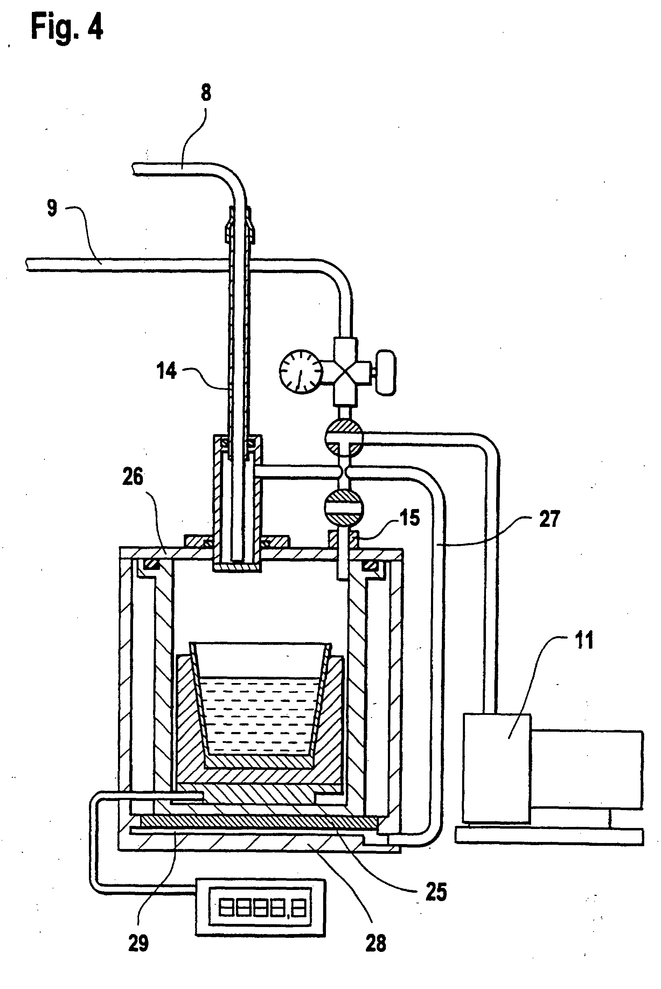

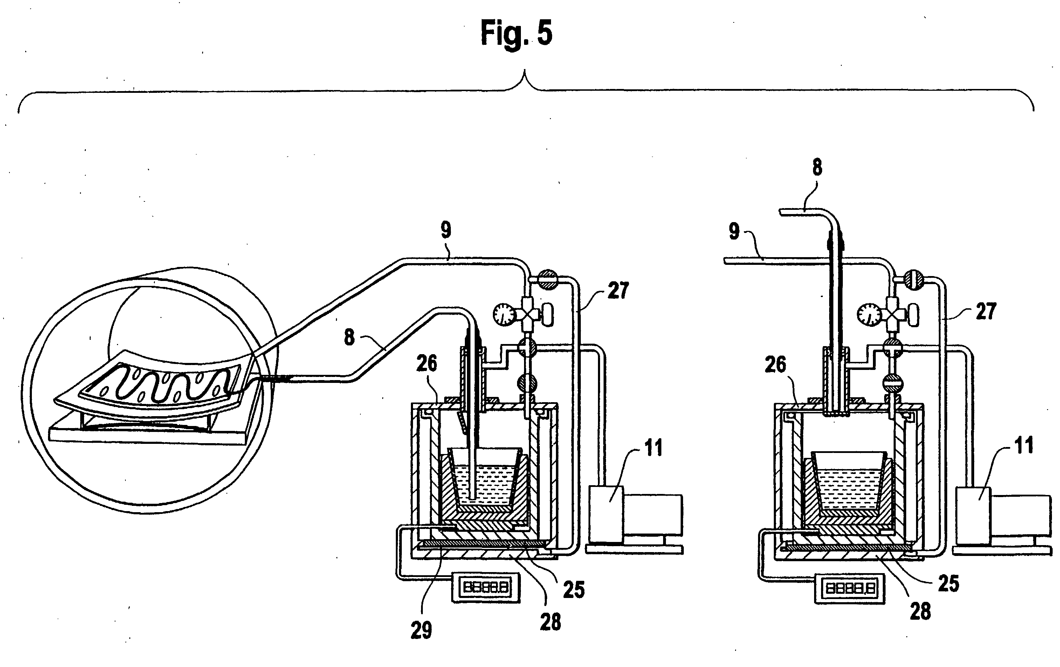

In einer weiteren bevorzugten Ausführungsform, wie sie in den Figuren 4 und 5 gezeigt ist, ist der Vorratsbehälter 10 beweglich in eine Spannvorrichtung eingebracht.

Diese Spannvorrichtung umfaßt einen oberen Abschluß 26, der den Deckel für den Vorratsbehälter bildet und die Anschlüsse 14 und 15 beinhaltet, sowie ein Bodenteil, das einen beweglichen Stempel 25 und einen unteren Abschluß 28 aufweist.

In der in Figur 4 gezeigten Spannvorrichtung steht der Raum 29 zwischen dem Stempel 25 und dem unteren Abschluß 28 über eine Leitung 27 sowohl mit der Drucktransferleitung 9 und damit mit der Drucksenke 11, als auch mit dem als Schiebehülse ausgestalteten Anschluß 14 für der luE-Leitung 8 in Verbindung.

Figur 5 zeigt eine Ausgestaltung in der der Raum 29 über die Drucktransferleitung 9 mit dem Druckbehälter 1 verbunden werden kann. Dabei kann in die Leitung 27 ein Regelmechanismus, z.B. ein Umschalthahn, eingebracht sein.

Die Seitenteile der Spannvorrichtung sind so ausgestaltet, daß der Vorratsbehälter 10 ohne weiteres aus der Spannvorrichtung entnommen werden kann. Beispielsweise kann zu diesem Zweck zumindest ein Seitenteil offen ausgestaltet sein.

Wird nun an den Raum 29 Vakuum angelegt oder herrscht Druckausgleich zwischen dem Behälterinnenraum und dem Raum 29 (wie in Figur 5 gezeigt), senkt sich der Stempel 25 und der Vorratsbehälter 10 kann aus der Spannvorrichtung herausgenommen und z.B. mit Harz gefüllt werden.

Zum vakuumdichten Verschließen des Vorratsbehälters 10 wird der Raum 29 mit Druck beaufschlagt, so daß sich der Stempel 25 hebt und der Vorratsbehälter 10 an den oberen Abschluß 26 der Spannvorrichtung gepreßt wird.

Zur sicheren Abdichtung kann eine Dichtung, z. B. eine O-Ringdichtung, zwischen dem Rand des Vorratsbehälters 10 und dem oberen Abschluß 26 vorgesehen sein.

Vorzugsweise erfolgt die Druckbeaufschlagung mit dem Druckbehälterdruck.

Um eine sichere Abdichtung zu gewährleisten, muß die Druckkraft, die auf den Stempel 25 einwirkt, größer sein als die Druckkraft, die durch den Druck in dem Vorratsbehälter 10 während der Injektionsphase ausgeübt wird.

In der in Figur 4 gezeigten Vorrichtung wird dies daduch bewirkt, indem die Querschnittsfläche des Raumes 29 bzw. des Stempels 25 größer gewählt wird, als die Querschnittsfläche des Vorratsbehälters.

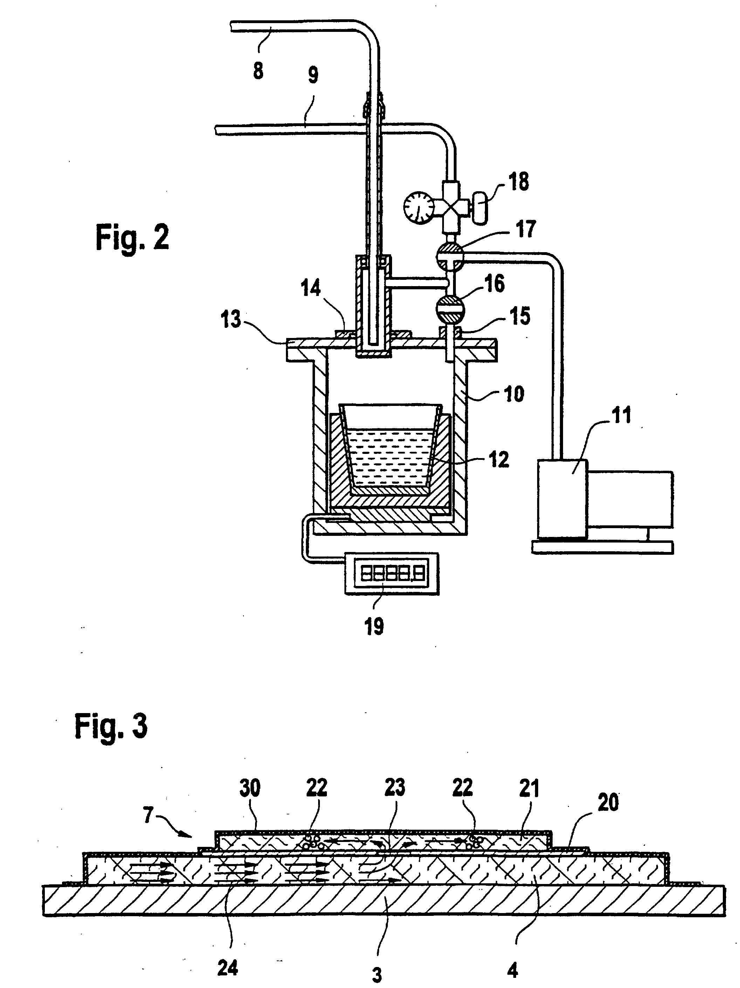

Die einzelnen Stufen des erfindungsgemäßen Verfahrens werden nachfolgend anhand der Figuren 1 und 2 genauer erläutert.

In der in Figur 2 gezeigten 1. Stufe, der Evakuierungsphase, ist der Vorrichtungsaufbau so eingestellt, daß die Vorrichtung über die luE-Leitung direkt evakuiert wird, indem der Absperrhahn 16 geschlossen und der Regelmechanismus 17 auf Vakuum gestellt wird.

In diesem Zustand kann der Deckel 13 des Vorratsbehälters 10 vom Behälter 10 entfernt werden, ohne die Evakuierung der Vorrichtung zu beeinträchtigen.

Nachdem anschließend der Vorratsbehälter 10 evakuiert und ein Druckausgleich zwischen Behältertopf und Deckel 13 durch Öffnen des Absperrhahns 16 hergestellt worden ist, kann die luE-Leitung 8 über den Anschluß 14, z. B. einer Schiebehülse mit Schwingklappe, in das Harz geschoben werden.

Während der in Figur 1 gezeigten 2. Stufe, der Injektionsphase, wird die Verbindung zur Drucksenke unterbrochen und der ggf. über den Druckminderer 18 reduzierte Druckbehälterdruck in den Vorratsbehälter 10 geleitet.

Aufgrund der Druckdifferenz wird das Harz nun über die luE-Leitung in die Form 2 gepreßt und verteilt sich über die Leitungselemente 6 auf dem Fasermaterial 4.

Das erfindungsgemäße Verfahren kann ohne weiteres automatisiert werden, indem z. B. die Verfahrensparameter wie Injektionsdruck und Druckbehältereinstellungen über den Harzvorrat im Vorratsbehälter 10 gesteuert werden.

Die Änderung des Harzvorrats kann z. B. durch einfaches Wiegen verfolgt werden, indem z. B. der Vorratsbehälter 10 auf eine Waage 19 gesetzt wird.

Beispiele für denkbare und sinnvolle Verfahrensvarianten können wie folgt sein:
- Injektionsdruck maximal zu Beginn der Injektionsphase, wenn der Vorratsbehälter maximal gefüllt ist;
- Injektionsdruck verringern bis der Harzfluß zum Stillstand kommt, wenn die erforderliche Harzmenge injiziert ist;
- Aushärtungsprozeß im Autoklaven einleiten, wenn der Injektionsvorgang abgeschlossen ist;
- Injektionsvorgang stoppen (Reduktion des Injektionsdruckes) bevor der Vorratsbehälter leer ist, um die Gefahr der Luftinjektion zu beseitigen.

Der Prozeß kann auf diese Weise nach einem vorgegebenen Programmschema ohne weitere Intervention von Bedienungspersonal ablaufen.

Aufgrund des Vakuums in der Form kann das Harz normalerweise das Fasermaterial 4 problemlos ohne Ausbildung von Gas- oder Lufteinschlüssen durchtränken.

Jedoch kann in dem Vakuum an der freien Oberfläche der Fließfront des Harzes, an der allein das Vakuum auf das Harz-Härter-Gemisch einwirkt, Härter ausgasen und der ausgegaste Härter entlang der Harzfließfront zu Gaseinschlüssen führen. Entlang der Fließfronten sammeln sich auch Verunreinigungen, die in dem Fasermaterial vorhanden sein können, eingeschlossene Restluft, Dampf, z.B. aus Feuchtigkeitsrückständen, Styrol etc.

Solange die Harzströme so geführt werden können, daß die Fließfronten in den Randbereichen des Fasermaterials 4 enden, stellt dies an sich kein Problem dar, solange diese Randbereiche bei der Endbearbeitung des Faserverbundelementes einfach entfernt werden können.

Treffen jedoch Fließfronten innerhalb des Fasermaterials 4 aufeinander, kommt es an diesen Stellen zur Ansammlung von Gaseinschlüssen und Verunreinigungen, die die Eigenschaften des fertigen Verbundelements maßgeblich beeinträchtigen können.

Es wurde gefunden, daß derartige Einschlüsse durch das Vorsehen eines speziell konzipierten Mittels 7, den sogenannten lokalen Kavitäten, aus dem Fasermaterial 4 entfernt werden können.

Eine Ausführungsform einer erfindungsgemäß eingesetzten lokalen Kavität 7 ist in Figur 3 gezeigt. Prinzipiell umfaßt die erfindungsgemäß eingesetzte lokale Kavität 7 einen Untergrund 20, der auf dem Fasermaterial 4 aufliegt, und auf dem Untergrund 20 aufgebracht ein Material 21 zum Aufnehmen der Gaseinschlüsse 22, wobei das Material 21 über mindestens eine Öffnung 23 in dem Untergrund 20 mit dem Fasermaterial 4 in Verbindung steht.

Je nach Bedarf werden eine oder mehrere lokale Kavitäten 7 auf dem Fasermaterial 4 an ausgezeichneten Stellen, an denen Harzfließfronten zusammentreffen, aufgebracht.

Der Verlauf des Harzstromes und damit der Fließfronten kann über die Anordnung der Leitungselemente 6 gezielt gesteuert werden, so daß die Stellen in dem Fasermaterial 4, an denen Harzfronten zusammentreffen, ohne weiteres bestimmt werden können.

Die Abmessungen der lokalen Kavität 7 sind an sich nicht kritisch, üblicherweise wird ihre Ausdehnung jedoch örtlich begrenzt.

Trifft wie in Figur 3 gezeigt, eine Harzfließfront 24 auf eine lokale Kavität 7, fließt ein Teil des Harzstromes durch die Öffnung 23 in das Material 21 zur Aufnahme der Gaseinschlüsse 22 und führt dabei Gaseinschlüsse und sonstige Verunreinigungen mit, die sich an der Harzfließfront angesammelt haben. Die lokale Kavität 7 stellt somit eine Gasblasenfalle für Gaseinschlüsse, Verunreinigungen etc. dar.

Im einfachsten Fall kann der Untergrund 20 eine gelochte Folie sein, wie sie in Figur 3 gezeigt ist. Die Anzahl der Öffnungen in dem Untergrund 20 kann nach Bedarf in Abhängigkeit der Größe der lokalen Kavität 7 gewählt werden.

Vorzugsweise sind die Öffnungen 23 so angeordnet, daß ein Rückfluß der Gaseinschlüsse 22 etc. aus der lokalen Kavität 7 in das Fasermaterial 4 verhindert wird. Beispielsweise kann/können die Öffnung(en) 23 mittig angeordnet sein, so daß der Strom der Gaseinschlüsse 22 in den Randbereichen der lokalen Kavität 7 eingeschlossen wird.

Der Untergrund kann aus einem beliebigen Material bestehen, das vorzugsweise durch das Harzgemisch nicht benetzbar sein sollte. Beispiele für geeignete Materialien sind Metall, Kunststoff, Gewebe usw.

Das Material zur Aufnahme der Gaseinschlüsse 22 kann ein beliebiges Fasermaterial, z. B. ein Faservließ, sein. Vorzugsweise wird ein Material gewählt, dessen Fließwiderstand für das Harz geringer ist als der Fließwiderstand des Fasermaterials 4. Der geringere Fließwiderstand fördert den Eintritt der Harzfließfront und damit der Gaseinschlüsse 22 in die lokale Kavität 7.

In einer bevorzugten Ausführungsform ist die erfindunsgemäß eingesetzte lokale Kavität 7 als gelochte Folientasche ausgebildet.

Wie vorstehend bereits gesagt, wird eine geeignete Anzahl an lokalen Kavitäten 7 auf das Fasermaterial 4 an den Stellen aufgebracht, an denen Fließfronten verlaufen bzw. zusammentreffen.

Nach Beendigung der Imprägnierung des Fasermaterials 4 mit dem Harz und der Aushärtung des Harzes werden die lokalen Kavitäten 7 nach Öffnen der Form 2 einfach von dem ausgehärteten faserverstärkten Verbundelement abgenommen. Mögliche Unebenheiten auf der Oberfläche des Verbundmaterials, die durch das Entfernen der lokalen Kavität 7 entstehen können, sind für die Qualität des Verbundteils nicht von Bedeutung, da die lokalen Kavitäten 7 zweckmäßigerweise auf der Seite des Fasermaterials 4 aufgebracht werden, die die Rückseite des zu erzeugenden Verbundteils bildet, und die Güte des fertigen Verbundteils durch die Beschaffenheit der Seite des Fasermaterials 4 bestimmt wird, die dem formgebenden Werkzeug 3 zugewandt ist.

Die lokale Kavität 7 zur Entfernung von Gaseinschlüssen aus mit Harz zu durchtränkenden Fasermaterialien 4 kann für jedes RTM-Verfahren bzw. Vorrichtung eingesetzt werden.

Es hat sich insbesondere auch für das vorstehend beschriebene Single-Line-Injektion-Verfahren bewährt, da bei diesem Verfahren die Evakuierung des Forminnenraumes sowie die Harzzufuhr über eine einzige Leitung erfolgt und demgemäß nicht die Möglichkeit besteht, Gaseinschlüsse gegebenenfalls über eine separate Vakuumleitung zu entfernen.

Bei herkömmlichen RTM-Vorrichtungen, die mit separaten Injektions- und Evakuierungsleitungen ausgestattet sind, besteht zwar prinzipiell die Möglichkeit Gaseinschlüsse über die Vakuumleitung zu entfernen, jedoch muß dabei aufgepaßt werden, daß kein Harz in die Vakuumleitung gezogen wird und zudem eignet sich diese Methode nicht für Gaseinschlüsse im Inneren des Fasermaterials an Stellen, an denen Harzfließfronten zusammentreffen.

### Bezugszeichenliste

- 1: Druckbehälter
- 2: Form
- 3: formgebendes Werkzeug
- 4: Fasermaterial
- 5: Stütze/Auflage
- 6: Leitungselement
- 7: lokale Kavität
- 8: Injektions- und Evakuierungsleitung (luE-Leitung)
- 9: Drucktransferleitung
- 10: Vorratsbehälter
- 11: Drucksenke
- 12: Harzbehälter
- 13: Deckel
- 14: Anschluß für luE-Leitung
- 15: Anschluß für Drucktransferleitung
- 16: Absperrmechanismus
- 17: Regelmechanismus
- 18: Druckminderer
- 19: Harzwaage
- 20: Untergrund der lokalen Kavität
- 21: Material zur Aufnahme von Gaseinschlüssen und Verunreinigungen
- 22: Gaseinschlüsse
- 23: Öffnung
- 24: Harzflußfront
- 25: Stempel
- 26: oberer Abschluß
- 27: Leitung
- 28: unterer Abschluß
- 29: Hohlraum zwischen Stempel und unterem Abschluß
- 30: flexibles Formteil

## Patentansprüche

1. Vorrichtung zur Herstellung von faserverstärkten Kunststoffen durch Injektion eines Harzes in eine Form (2) mit einem formgebenden Werkzeug (3), zur Aufnahme eines Fasermaterials (4) und einem flexiblem Formteil zum vakuumdichten Abdichten der Form (2), wobei die geschlossene Form (2) in einen Druckbehälter (1) eingebracht wird,
**dadurch gekennzeichnet,**
**daß** die Form (2) mit einer kombinierten Injektions- und Evakuierungsleitung (8) versehen ist, und der Druckbehälter (1) mit einer Drucktransferleitung (9) versehen ist, wobei die Form (2) über die kombinierte Injektionsund Evakuierungsleitung (8) wahlweise mit einem Vorratsbehälter (10) zur Aufnahme des Harzes und einer Drucksenke (11 ) verbindbar ist, der Druckbehälter (1) mit dem Vorratsbehälter (10) verbindbar ist und der Vorratsbehälter (10) über Anschlüsse (14, 15) mit der Injektions- und Evakuierungsleitung (8) und der Drucktransferleitung (9) verbindbar ist.

2. Vorrichtung nach Anspruch 1,
**dadurch gekennzeichnet,**
**daß** der Anschluß (14) für die Injektions- und Evakuierungsleitung (8) als Schiebehülse ausgestaltet ist.

3. Vorrichtung nach einem der Ansprüche 1 oder 2,
**dadurch gekennzeichnet,**
**daß** der Anschluß (15) der Drucktransferleitung (9) durch einen in der Drucktransferleitung vorgesehenen Absperrmechanismus (16) verschließbar ist.

4. Vorrichtung nach einem der Ansprüche 1 bis 3,
**dadurch gekennzeichnet,**
**daß** die Drucktransferleitung (9) mit einem Druckminderer (18) versehen ist.

5. Vorrichtung nach einem der vorhergehenden Ansprüche,
**dadurch gekennzeichnet,**
**daß** der Vorratsbehälter (10) während der Evakuierung des Forminnenraumes bei geschlossenen Anschlüssen (14, 15) von der Vorrichtung abnehmbar ist.

6. Vorrichtung nach einem der vorhergehenden Ansprüche,
**dadurch gekennzeichnet,**
**daß** der Vorratsbehälter (10) mit einer Waage (19) verbunden ist.

7. Vorrichtung nach einem der vorhergehenden Ansprüche,
**dadurch gekennzeichnet,**
**daß** der Vorratsbehälter (10) mit einer Heizvorrichtung ausgestattet ist.

8. Vorrichtung nach einem der vorhergehenden Ansprüche,
**dadurch gekennzeichnet,**
**daß** der Vorratsbehälter (10) zum vakuumdichten Verschließen beweglich in eine automatische Spannvorrichtung integriert ist.

9. Vorrichtung nach Anspruch 8,
**dadurch gekennzeichnet,**
**daß** die Spannvorrichtung einen beweglichen Stempel (25) aufweist, mit dem der Vorratsbehälter (10) gegen einen oberen Abschluß (26) zum vakuumdichten Verschließen des Vorratsbehälters (10) preßbar ist.

10. Verfahren zur Herstellung von faserverstärkten Kunststoffen durch Injektion eines Harzes in eine Form (2), wobei ein formgebendes Werkzeug (3), auf das ein Fasermaterial (4) abgelegt ist, mit einem flexiblen Formteil vakuumdicht abgedichtet wird, die geschlossene Form (2) in einem Druckbehälter (1) eingebracht wird und der Druckbehälter über eine Drucktransferleitung (9) wahlweise mit einem Vorratsbehälter (10) für das Harz oder einer Drucksenke (11) verbindbar ist,
**dadurch gekennzeichnet,**
**daß** die Injektion des Harzes und die Evakuierung der Form (2) über eine kombinierte Injektions- und Evakuierungsleitung (8) erfolgt.

11. Verfahren nach Anspruch 10,
**dadurch gekennzeichnet,**
**daß** in einer ersten Stufe die Injektions- und Evakuierungsleitung (8) zur Evakuierung der Form(2) mit einer Drucksenke verbunden wird und in einer zweiten Stufe die Injektion eines Harzes oder Harzgemisches erfolgt, indem nach Erreichen des Endvakuums in der Form (2) die Verbindung zur Drucksenke (11) unterbrochen wird und die Injektions- und Evakuierungsleitung (8) mit dem Vorratsbehälter (10), der das Harz enthält, verbunden wird.

12. Verfahren nach Anspruch 10 oder 11,
**dadurch gekennzeichnet,**
**daß** der Druckbehälter (1) mit einem über dem Atmosphärendruck liegenden Druck beaufschlagt wird.

13. Verfahren nach einem der Ansprüche 10 bis 12,
**dadurch gekennzeichnet,**
**daß** in dem Druckbehälter (1) eine erhöhte Temperatur herrscht.

14. Verfahren nach einem der Ansprüche 10 bis 13,
**dadurch gekennzeichnet,**
**daß** der Vorratsbehälter (10) mit Druck beaufschlagt wird und der auf den Vorratsbehälter (10) einwirkende Druck über einen Druckminderer (18) in der Drucktransferleitung (9) kontrolliert wird.

15. Verfahren nach einem der Ansprüche 10 bis 14,
**dadurch gekennzeichnet,**
**daß** der Vorratsbehälter (10) vor der Druckbeaufschlagung evakuiert wird.

16. Verfahren nach einem der Ansprüche 10 bis 15,
**dadurch gekennzeichnet,**
**daß** auf dem Fasermaterial (4) mindestens ein Mittel zur Aufnahme von Gaseinschlüssen (lokale Kavität (7)) aus dem Fasermaterial während der Imprägnierung mit dem Harz vorgesehen wird.

17. Verfahren nach Anspruch 16,
**dadurch gekennzeichnet,**
**daß** das Mittel zur Aufnahme von Gaseinschlüssen (lokale Kavität (7)) auf dem Fasermaterial (4) in Bereichen angeordnet ist, an denen die Fließfronten des Harzes während des Injektionsvorganges in dem Fasermaterial (4) zusammentreffen.

18. Verfahren nach einem Ansprüche 16 oder 17,
**dadurch gekennzeichnet,**
**daß** das Mittel zum Entfernen von Gaseinschlüssen (lokale Kavität (7)) nach dem Aushärten des Harzes von dem imprägnierten Fasermaterial (4) entfernt wird.

19. Verfahren nach einem der Ansprüche 16 bis 18,
**dadurch gekennzeichnet,**
**daß** das Mittel einen Untergrund (20) mit mindestens einer Öffnung (23) und auf dem Untergrund (20) aufgebracht ein Material (21) zur Aufnahme der Gaseinschlüsse (22) aufweist.

20. Verfahren nach Anspruch 19,
**dadurch gekennzeichnet,**
**daß** das Material (21) zur Aufnahme der Gaseinschlüsse (22) ein Faservließ ist.

21. Verfahren nach Anspruch 19 oder 20,
**dadurch gekennzeichnet,**
**daß** das Material (21) zur Aufnahme der Gaseinschlüsse (22) einen Fließwiderstand für das Harz hat, der geringer als der Fließwiderstand des Fasermaterials (4) ist.

22. Verfahren nach einem der Ansprüche 19 bis 21,
**dadurch gekennzeichnet,**
**daß** der Untergrund (20) aus einer gelochten Folie gebildet ist.

23. Verfahren nach einem der Ansprüche 19 bis 22,
**dadurch gekennzeichnet,**
**daß** der Untergrund (20) aus einem Metall, einem Kunststoff oder einem Gewebe besteht.

24. Verfahren nach einem der vorhergehenden Ansprüche 19 bis 23,
**dadurch gekennzeichnet,**
**daß** das Mittel als gelochte Tasche ausgebildet ist.

## Claims

1. Device for the production of fibre-reinforced plastics by injection of a resin into a mould (2) with a shaping tool (3) for receiving a fibre material (4) and with a flexible mould part to seal the mould (2) vacuum-tight, wherein the closed mould (2) is placed in a pressure container (1), **characterised in that** the mould (2) is provided with a combined injection and evacuation duct (8), and the pressure container (1) is provided with a pressure transfer duct (9), wherein the mould (2) may be connected via the combined injection and evacuation duct (8) selectively to a storage container (10) for receiving the resin and to a pressure sink (11), the pressure container (1) may be connected to the storage container (10) and the storage container (10) may be connected to the injection and evacuation duct (8) and the pressure transfer duct (9) via connections (14, 15).

2. Device according to Claim 1, **characterised in that** the connection (14) for the injection and evacuation duct (8) is constructed as a sliding sleeve.

3. Device according to one of Claims 1 or 2, **characterised in that** the connection (15) of the pressure transfer duct (9) may be closed by a locking mechanism (16) provided in the pressure transfer duct.

4. Device according to one of Claims 1 to 3, **characterised in that** the pressure transfer duct (9) is provided with a pressure reducing means (18).

5. Device according to one of the preceding claims, **characterised in that** the storage container (10) may be removed from the device during evacuation of the mould interior when the connections (14, 15) are closed.

6. Device according to one of the preceding claims, **characterised in that** the storage container (10) is connected to a weighing machine (19).

7. Device according to one of the preceding claims, **characterised in that** the storage container (10) is equipped with a heating device.

8. Device according to one of the preceding claims, **characterised in that** the storage container (10) is movably integrated into an automatic clamping device for vacuum-tight closure.

9. Device according to Claim 8, **characterised in that** the clamping device has a movable die (25), with which the storage container (10) may be pressed against an upper closing means (26) for vacuum-tight closure of the storage container (10).

10. Process for the production of fibre-reinforced plastics by injection of a resin into a mould (2), wherein a shaping tool (3), onto which a fibre material (4) is deposited, is sealed vacuum-tight with a flexible mould part, the closed mould (2) is placed in a pressure container (1) and the pressure container may be connected selectively to a storage container (10) for the resin or a pressure sink (11) via a pressure transfer duct (9), **characterised in that** the injection of the resin and the evacuation of the mould (2) occur via a combined injection and evacuation duct (8).

11. Process according to Claim 10, **characterised in that** in a first step the injection and evacuation duct (8) is connected to a pressure sink for evacuation of the mould (2), and in a second step the injection of a resin or resin mixture occurs as a result of the connection to the pressure sink (11) being interrupted after the final vacuum has been achieved in the mould (2) and the injection and evacuation duct (8) being connected to the storage container (10) which contains the resin.

12. Process according to Claim 10 or 11, **characterised in that** the pressure container (1) is subjected to a pressure lying above atmospheric pressure.

13. Process according to one of Claims 10 to 12, **characterised in that** an elevated temperature prevails in the pressure container (1).

14. Process according to one of Claims 10 to 13, **characterised in that** the storage container (10) is subjected to pressure and the pressure acting on the storage container (10) is controlled via a pressure reducing means (18) in the pressure transfer duct (9).

15. Process according to one of Claims 10 to 14, **characterised in that** the storage container (10) is evacuated before the subjection to pressure.

16. Process according to one of Claims 10 to 15, **characterised in that** at least one means for receiving gas inclusions (local cavity (7)) from the fibre material is provided on the fibre material (4) during impregnation with the resin.

17. Process according to Claim 16, **characterised in that** the means for receiving gas inclusions (local cavity (7)) is disposed on the fibre material (4) in regions at which the flow boundaries of the resin meet during the injection process in the fibre material (4).

18. Process according to one of Claims 16 or 17, **characterised in that** the means for removing gas inclusions (local cavity (7)) is removed from the impregnated fibre material (4) after hardening of the resin.

19. Process according to one of Claims 16 to 18, **characterised in that** the means has an undersurface (20) with at least one opening (23) and a material (21) for absorbing the gas inclusions (22) applied to the undersurface (20).

20. Process according to Claim 19, **characterised in that** the material (21) for absorbing the gas inclusions (22) is a non-woven fabric.

21. Process according to Claim 19 or 20, **characterised in that** the material (21) for absorbing the gas inclusions (22) has a flow resistance for the resin which is less than the flow resistance of the fibre material (4).

22. Process according to one of Claims 19 to 21, **characterised in that** the undersurface (20) is formed from a perforated foil.

23. Process according to one of Claims 19 to 22, **characterised in that** the undersurface (20) is made of a metal, a plastic or a woven fabric.

24. Process according to one of the preceding Claims 19 to 23, **characterised in that** the means is in the form of a perforated pocket.

## Revendications

1. Dispositif pour la fabrication de matières plastiques renforcées par des fibres par injection d'une résine dans un moule (2) avec un outil de façonnage (3) pour la réception d'une matière fibreuse (4) et une pièce usinée souple pour l'étanchement au vide du moule (2), moyennant quoi le moule fermé (2) est installé dans un réservoir sous pression (1), **caractérisé en ce que** le moule (2) est muni d'un conduit combiné d'injection et d'évacuation (8) et le réservoir sous pression (1) est muni d'un conduit de transfert de pression (9), moyennant quoi le moule (2) peut être raccordé, par l'intermédiaire du conduit combiné d'injection et d'évacuation (8), au choix, à un réservoir de stockage (10) pour la réception de la résine et un puits sous pression (11), le réservoir sous pression (1) peut être raccordé au réservoir de stockage (10) et le réservoir de stockage (10) peut être raccordé au conduit d'injection et d'évacuation (8) et au conduit de transfert de pression (9) par l'intermédiaire de raccordements (14, 15).

2. Dispositif selon la revendication 1, **caractérisé en ce que** le raccordement (14) pour le conduit d'injection et d'évacuation (8) est configuré comme un manchon coulissant.

3. Dispositif selon la revendication 1 ou 2, **caractérisé en ce que** le raccordement (15) du conduit de transfert de pression (9) peut être obturé par un mécanisme d'obturation (16) prévu dans le conduit de transfert de pression.

4. Dispositif selon l'une quelconque des revendications 1 à 3, **caractérisé en ce que** le conduit de transfert de pression (9) est muni d'un réducteur de pression (18).

5. Dispositif selon l'une quelconque des revendications précédentes, **caractérisé en ce que** le réservoir de stockage (10) peut être démonté du dispositif pendant l'évacuation de l'intérieur du moule avec les raccordement (14, 15) fermés.

6. Dispositif selon l'une quelconque des revendications précédentes, **caractérisé en ce que** le réservoir de stockage (10) est relié à une balance (19).

7. Dispositif selon l'une quelconque des revendications précédentes, **caractérisé en ce que** le réservoir de stockage (10) est équipé d'un dispositif de chauffage.

8. Dispositif selon l'une quelconque des revendications précédentes, **caractérisé en ce que** le réservoir de stockage (10) est intégré de manière mobile dans un dispositif de serrage automatique pour l'obturation étanche au vide.

9. Dispositif selon la revendication 8, **caractérisé en ce que** le dispositif de serrage comporte un piston mobile (25) à l'aide duquel le réservoir de stockage (10) peut être comprimé contre une fermeture supérieure (26) pour l'obturation étanche au vide du réservoir de stockage (10).

10. Procédé pour la fabrication de matières plastiques renforcées par des fibres par injection d'une résine dans un moule (2), moyennant quoi un outil de façonnage (3), sur lequel une matière fibreuse (4) est déposée, est étanché au vide à l'aide d'une pièce usinée souple, le moule fermé (2) est installé dans un réservoir sous pression (1) et le réservoir sous pression peut être raccordé, par l'intermédiaire d'un conduit de transfert de pression (9), au choix, à un réservoir de stockage (10) pour la résine ou à un puits sous pression (11), **caractérisé en ce que** l'injection de la résine et l'évacuation du moule (2) se font par l'intermédiaire d'un conduit combiné d'injection et d'évacuation (8).

11. Procédé selon la revendication 10, **caractérisé en ce que** le conduit d'injection et d'évacuation (8) est raccordé à un puits sous pression pour l'évacuation du moule (2) pendant une première étape et **en ce que** l'injection d'une résine ou d'un mélange de résines se fait pendant une seconde étape, le raccordement avec le puits sous pression (11) étant interrompu une fois le vide final atteint et le conduit d'injection et d'évacuation (8) étant raccordé au réservoir de stockage (10) qui contient la résine.

12. Procédé selon la revendication 10 ou 11, **caractérisé en ce que** le réservoir sous pression (1) est alimenté par une pression supérieure à la pression atmosphérique.

13. Procédé selon l'une quelconque des revendications 10 à 12, **caractérisé en ce qu'**une température élevée règne dans le réservoir sous pression (1).

14. Procédé selon l'une quelconque des revendications 10 à 13, **caractérisé en ce que** le réservoir de stockage (10) est alimenté en pression et **en ce que** la pression s'exerçant sur le réservoir de stockage (10) est régulée à l'aide d'un réducteur de pression (18) dans le conduit de transfert de pression (9) .

15. Procédé selon l'une quelconque des revendications 10 à 14, **caractérisé en ce que** l'on fait le vide dans le réservoir de stockage (10) avant l'alimentation en pression.

16. Procédé selon l'une quelconque des revendications 10 à 15, **caractérisé en ce qu'**il est prévu, sur la matière fibreuse (4), au moins un moyen pour l'absorption d'inclusions d'air (cavité locale (7)) provenant de la matière fibreuse pendant l'imprégnation avec la résine.

17. Procédé selon la revendication 16, **caractérisé en ce que** le moyen pour l'absorption d'inclusions d'air (cavité locale (7)) sur la matière fibreuse (4) est disposé dans des zones dans lesquelles les fronts d'écoulement de la résine pendant l'opération d'injection se rejoignent dans la matière fibreuse (4).

18. Procédé selon l'une quelconque des revendications 16 ou 17, **caractérisé en ce que** le moyen pour l'absorption d'inclusions d'air (cavité locale (7)) est enlevé de la matière fibreuse imprégnée (4) après le durcissement de la résine.

19. Procédé selon l'une quelconque des revendications 16 à 18, **caractérisé en ce que** le moyen comporte un fond (20) avec au moins une ouverture (23) et une matière (21) appliquée sur le fond (20) pour l'absorption des inclusions d'air (22).

20. Procédé selon la revendication 19, **caractérisé en ce que** la matière (21) pour l'absorption des inclusions d'air (22) est un non tissé.

21. Procédé selon la revendication 19 ou 20, **caractérisé en ce que** la matière (21) pour l'absorption des inclusions d'air (22) a une résistance à l'écoulement inférieure à la résistance à l'écoulement de la matière fibreuse (4).

22. Procédé selon l'une quelconque des revendications 19 à 21, **caractérisé en ce que** le fond (20) est constitué d'une feuille perforée.

23. Procédé selon l'une quelconque des revendications 19 à 22, **caractérisé en ce que** le fond (20) est constitué d'un métal, d'une matière plastique ou d'un tissu.

24. Procédé selon l'une quelconque des revendications 19 à 23, **caractérisé en ce que** le moyen est conçu comme une poche perforée.
